# EUROPEAN PATENT SPECIFICATION

(11) **EP 0 434 170 B1**
(45) Date of publication and mention of the grant of the patent: **20.08.1997**
(21) Application number: 90203505.4
(22) Date of filing: 21.12.1990
(51) Int. Cl.: G05D 23/24, G05D 23/19

(54) **Thermostat**
Thermostat
Thermostat

(30) Priority: 22.12.1989 NL 8903152
(43) Date of publication of application: 26.06.1991
(73) Proprietor: Nederhoed, Reinder Eric, NL-8531 NS Lemmer (NL)
(72) Inventor: Nederhoed, Reinder Eric, NL-8531 NS Lemmer (NL)
(74) Representative: 't Jong, Bastiaan Jacobus

(56) References cited:
- DE-A- 3 138 701
- US-A- 4 162 036

## Description

The invention relates to a thermostat as defined in the introductory part of claim 1.

Such a thermostat is generally known as a clock thermostat and described in US-A-4.162.036. Using a clock thermostat a heating device can automatically maintain a comfort temperature in a room in which the thermostat is mounted during hours of the day set with the comfort time setting means, while at other times, for instance at night, a lower wait temperature is maintained. In this way the room is not heated unnecessarily to an excessive temperature, with the purpose of saving heating costs.

A clock thermostat of the mentioned type is therefore only useful when whoever uses the area for heating has a direct interest in limiting the heating costs. Should this not be the case, there is the danger that the clock thermostat is not utilized consistently. This may occur in office premises, hotel rooms, holiday bungalows etc. Users of such areas generally have no interest whatever in low heating costs, so that the heating device will not be used efficiently.

The invention now has for its object to provide a thermostat of the type described in the preamble which provides an efficient control of the heating device, also when the user has no direct interest in doing so, in a manner such that this does not adversely affect comfort.

With the thermostat as characterized in claim 1, this object is achieved. The wait temperature can not be adjusted by the user to an unnecessarily high value and the comfort time to an unnecessarily low value. When the switch-on means is actuated the thermostat switches directly to the comfort temperature which is freely adjustable. After passage of the time period determined with the comfort time setting means the thermostat switches automatically to the set wait temperature. The user can then immediately actuate the switch-on means again so that when the user is present in the room he can himself at all times adjust the temperature thereof to the value desired by him. When the user is not present the thermostat switches after expiry of the comfort time period from the last occasion that the switch-on means were actuated to the wait temperature which is maintained until the switch-on means is again actuated.

In preference the step of claim 2 is applied. The attention of the user is thereby drawn to the transition to the lower wait temperature so that he can operate the switch-on means directly to activate the comfort temperature.

A favourable further development of the invention is characterized in claim 3. The rest temperature is set in this further developed thermostat to an "anti-frost value". When the area for heating is not used for a long period it would be wasteful to maintain the wait temperature, so that with this further development an additional energy saving is achieved.

In the case of use of the thermostat for a holiday bungalow the wait time can for example be set to eight hours and the comfort time to two hours. When the bungalow is occupied the users can heat it to the desired comfort temperature during their presence. During their absence and at night the lower wait temperature is maintained. When there are no occupants for the holiday bungalow the thermostat switches automatically after passage of the wait time to the rest temperature so that freezing of the heating device and water pipes and the like is prevented.

With a further development of the thermostat according to the invention the step of claim 4 is applied. Thus ensured is that the thermostat can function at all times when the heating device itself is in order. The supply voltage for the circuits of the thermostat is available at all times without a connection to the mains supply being necessary. The thermostat according to the invention is hereby completely maintenance-free.

The invention will be further elucidated in the following description with reference to a diagram of a preferred embodiment.

The thermostat circuit 1 is arranged in a manner evident to a person skilled in the art on a printed circuit board and fitted in a housing (not further shown). The values of the different components shown, such as resistors and diodes, can be easily determined by a person skilled in the art on the basis of the desired specifications. Only the operation of the circuit will therefore be described in the following.

The thermostat circuit 1 serves to switch on a heating device by connecting two terminals to one another. Typically, a switching voltage is hereby switched through whereby for instance a gas valve of the heating device is activated.

In the non-active condition of the thermostat, that is, in the condition wherein the heating device is not switched on, an electrical voltage is applied to the terminals 4 which will normally be an alternating voltage. This voltage is rectified and the positive terminal is connected to accumulator cells 3 connected in series which may for instance be nickel-cadmium cells. In the non-active condition the accumulator cells 3 are therefore charged. The accumulator cells 3 form the feed source for the thermostat circuit 1. As long as the heating device functions and is connected to the terminals 4, the circuit 1 thus retains its supply voltage.

The circuit can be switched on using the switch 5.

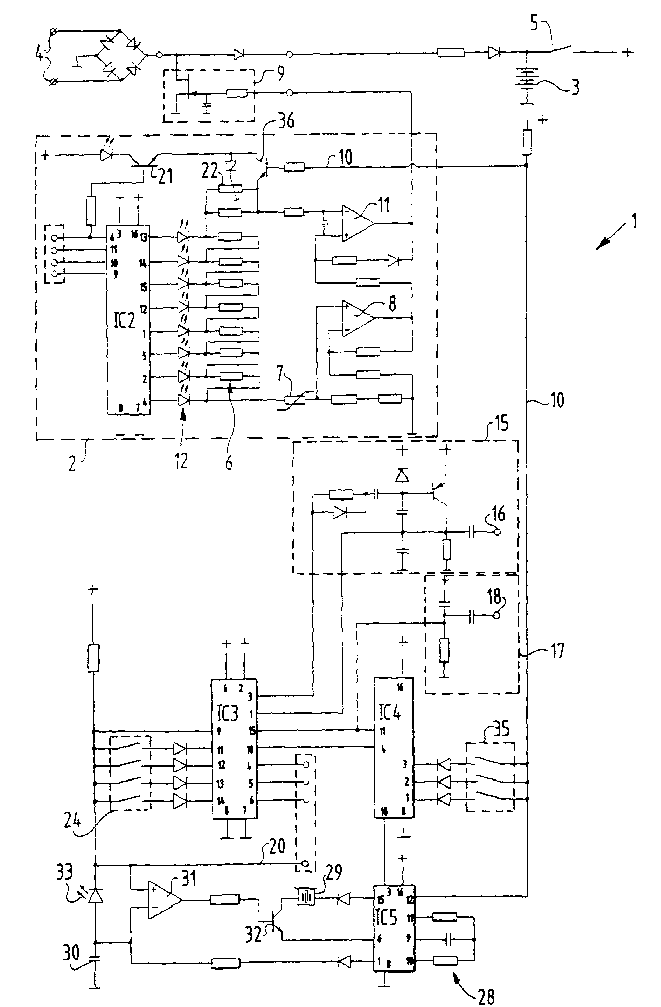

The actual thermostat circuit is designated with the reference numeral 2. This thermostat circuit is based on an analog switch IC2 which in this embodiment is an IC of the HEF4051 type. In accordance with a digital code on the input pins 9-11, one of the pins drawn on the right-hand side is in the logic condition 1, corresponding to a "high" voltage level. The output pins are connected in the manner shown to a series of resistors 6 connected in series. To this series of resistors 6 is further connected in series a temperature sensor 7 in the form of a resistor with positive temperature coefficient. The output of the operational amplifier 11 becomes "high" as soon as the voltage on the input connected to the series connection of resistors 6, 7 falls below a determined value set with the operational amplifier 8. The larger the number of resistors 6 included in the circuit, the lower the temperature at which this will occur. The resistors connected in series can for instance be selected such that when the output pin of IC2 uppermost in the figure is "high" the switching temperature is 17°C, while each following output pin downward corresponds with a one degree higher temperature. Accommodated in the output terminals are LEDs which are visible on a control panel of the thermostat and can thus indicate which temperature is set. As a result of the output of the operational amplifier 11 becoming high the switching unit 9 is activated which short-circuits the terminals 4 and thus activates the heating device. Connected to the input of the operational amplifier 11 is a circuit which provides a hysteresis which ensures that the switch-off temperature comes to lie at a higher value, for example a value of half a degree C higher.

The choice of setting of the analog switch IC2 takes place using a counter-IC, IC3, which in this embodiment is of the HEF4520 type. The outputs 4, 5, 6 of IC3 are connected to the respective inputs 11, 10 and 9 of IC2.

The input terminals 1 and 3 of IC3 corresponding with the mentioned output terminals are connected to the comfort temperature setting means 15. This setting means 15 comprises a touch-key 16 which is arranged on the thermostat housing at a position accessible from outside. By touching the key 16 the input of IC3 receives a counting signal which leads to an up-count binary code on the output pins 4-6. As described, a corresponding output pin is set to "high" by IC2 in accordance with this binary code, so that the pins associated with rising temperatures are successively set to "high" by the up-count code. As soon as the desired comfort temperature is set, which the user sees as a result of lighting up of the associated LED 12, the user releases the key 16 and the obtained value remains set.

IC2 has an "enable" pin 6. As long as this pin 6 is "low", IC2 is active. When pin 6 becomes "high", all outputs of IC2 become "low". As the terminal on pin 6 of IC2 becomes high, transistor 21 becomes conductive so that the whole series of resistors 6 is connected via the adjustable resistor 22 to the positive voltage. The total resistance of the series connection of the adjustable resistor 22, the resistors 6 and temperature sensor 7 thus determines the switching temperature. This switching temperature is therefore adjustable with the adjustable resistor 22 which forms the wait temperature setting means 22 according to the invention. This wait temperature setting means 22 is fitted in the housing of the thermostat such that it is inaccessible in the mounted position. The wait temperature setting means 22 is preferably accessible via an opening in a rear wall of the housing, which rear wall is fitted in the mounted position against a wall of the room whose temperature has to be controlled by the thermostat. The wait temperature setting means 22 can for instance be adjusted in suitable manner such that the thermostat uses 15°C as target temperature.

"High" and "low" switching of pin 6 of IC2 is carried out using a second counter part of IC3. This second counter part receives on pin 10 count pulses from IC4, which are given for instance every 15 minutes. The output pins 11-14 of IC3 become "high" and "low" in accordance with a binary code. The code, or the binary number at the output 11-14, begins with the value 0 as soon as a reset-pulse is applied to pin 15. This reset-pulse is excited with the switch-on means 17 which comprises a touch-key 18. As soon as key 18 is touched the relevant part of the counter IC3 is set to 0, that is, the outputs 11-14 become "low".

The outputs 11-14 are connected via switches to a lead 20 connected to the "enable" pin 6 of IC2. The lead 20 is connected to the positive voltage via a resistor.

Using the four shown switches which together form the comfort time setting means 24 according to the invention the outputs 11-14 can be connected in a desired combination to the lead 20. As long as one of the output pins 11-14 connected to a closed switch is "low", the lead 20 is pulled "low" and the IC2 thus kept in the active condition. With the comfort time setting means 24 the time period is therefore set during which the IC2 remains switched on and the comfort temperature for the thermostat set with IC2 thus remains valid as target temperature. After expiry of the set comfort time lead 20 becomes "high" and IC2 is thus switched off, whereby the wait temperature for the thermostat set with the wait temperature setting means 22 will become valid as target temperature. As lead 20 becomes "high", pin 9 of IC3 likewise becomes "high", whereby this is de-activated and stops counting.

IC5 has the clock function in the circuit 1. This IC is of the HEF4060 type in this embodiment. IC5 generates a clock frequency having a value set by the circuit 28. A transistor 32 and a buzzer 29 are connected in series between pin 15 and pin 6. The base of transistor 32 is connected to the output of an operational amplifier 31. As long as lead 20 is "low", a voltage difference is set by LED 33 on the inputs of the operational amplifier 31 such that the output thereof remains "low". As soon as lead 20 now becomes "high" after expiry of the wait time, the output of operational amplifier 31 likewise becomes "high", whereby the transistor 32 becomes conductive. Buzzer 29 hereby gives an audible warning signal subject to the pulses 6 and 15 of IC5. When for instance pin 6 carries pulses at an interval of one second and pin 15 pulses at an interval of 100 ms, the buzzer 29 will emit series of tones one directly after the other. Buzzer 29 remains in operation until the capacitor 30 is charged to such an extent that the voltage difference on the inputs of operational amplifier 31 has fallen so far that the output again becomes "low".

The buzzer 29 therefore signals the expiry of the comfort time. A person present in the relevant room is thereby warned that the thermostat is switching to the lower wait temperature and, if he does not desire this, he can reset the comfort condition by touching key 18.

With operation of the switch-on means 17 IC4 is reset as well as IC3. IC4 is in this embodiment an IC of the HEF4020 type. IC4 receives on its pin 10 clock pulses from IC5 and transmits to pin 4 pulses for IC3 which receives these on pin 10. These pulses are given at an interval of for instance 15 minutes. With the comfort time setting means 24 the comfort time can thereby be set in steps of 15 minutes.

Connected to the pins 1, 2 and 3 of IC4 is a number of switches which together form a wait time setting means 35. This operates in a manner similar to the comfort time setting means 24. The minimum adjustable wait time, corresponding with the magnitude of the step, is longer than the maximum adjustable comfort time. After expiry of the comfort time, wherein the comfort temperature set by the user is used as target temperature, the thermostat therefore switches to the set wait temperature. The wait temperature remains valid as target temperature for the thermostat as long as the time set with the wait time setting means 35 has not yet expired. In the same way as the comfort time setting means 24 this wait time setting means is mounted in the housing of the thermostat and inaccessible to the user. After expiry of the wait time, lead 10 becomes "high" whereby transistor 36 becomes conductive in the actual thermostat part 2 of the circuit and this thermostat part 2 is set such that a fixed rest temperature will apply as target temperature. This rest temperature is for instance 7°C. This rest temperature remains valid as target temperature until the switch-on means 17 is actuated once again by touching the key 18. At that moment IC3 and IC4 are reset and the comfort time and wait time begin to function again.

The thermostat housing can be fitted for instance by means of a mounting plate onto a wall with a snap connection. The latter is preferably embodied such that it can only be released with a particular tool. The setting means that are inaccessible in the mounted position, such as the comfort time setting means 24, the wait time setting means 35 and the wait temperature setting means 22 are therein arranged in the thermostat housing such that they are only accessible when the housing is removed from the mounting plate. The person responsible for the area in which the thermostat is arranged can make the desired settings before the final fitting of the thermostat. If the settings later have to be altered, this can be carried out by removing the thermostat housing from the mounting plate.

## Claims

1. Thermostat (1) comprising a housing, a switching unit (9) accommodated in the housing which in an active condition can switch on a heating device and a control device for the switching unit (9) associated with a temperature sensor (7) and comprising a clock unit, a comfort temperature setting means (15), a wait temperature setting means (22) and a comfort time setting means (24), said wait temperature setting means (22) and said comfort time setting means (24) being inaccessible, in the installed position of the thermostat (1), wherein the control device uses a set comfort temperature as target temperature during a set comfort time and outside this set comfort time uses a set wait temperature as target temperature, **characterized in that** the comfort time setting means (24) is a time period setting means and that a switch-on means (17) connected to the control device and accessible from outside is arranged on the housing, through operation of which the comfort time begins.

2. Thermostat as claimed in claim 1, comprising an acoustic signalling means (29) which is activated briefly by the control device after expiry of the comfort time.

3. Thermostat as claimed in claim 1 or 2, comprising a fixed rest temperature setting and a wait time setting means (35) which are inaccessible in the installed position of the thermostat, wherein the wait time setting means (35) is a time period setting means and wherein the control device uses the wait temperature as target temperature during the set wait time after expiry of the comfort time and thereafter uses the rest temperature as target temperature.

4. Thermostat as claimed in any of the foregoing claims, wherein the switching unit (9) is of the type which in the active condition can mutually connect two conductors (4) of a heating device carrying electrical voltage, that the control device comprises electronic circuits which are fed from electrical accumulator cells (3) accommodated in the thermostat housing and that the accumulator (3) cells are connected to the conductors (4) in the non-active condition of the switching unit such that they are charged by the electrical voltage from the conductors.

## Patentansprüche

1. Thermostat (1) mit einem Gehäuse, einer in dem Gehäuse untergebrachten Schalteinheit (9), die in einem aktiven Zustand eine Heizvorrichtung einschalten kann, und einer Steuervorrichtung zum Schalten der Schalteinheit (9), der ein Temperatursensor (7) zugeordnet ist und die eine Takteinheit, eine Komforttemperatur-Einstelleinrichtung (15), eine Bereitschaftstemperatur-Einstelleinrichtung (22) und eine Komfortzeit-Einstelleinrichtung (24) aufweist, wobei die Bereitschaftstemperatur-Einstelleinrichtung (22) und die Komfortzeit-Einstelleinrichtung (24) in der Montageposition des Thermostaten (1) nicht zugänglich sind, wobei die Steuervorrichtung eine eingestellte Komforttemperatur als Solltemperatur während einer eingestellten Komfortzeit und außerhalb dieser eingestellten Komfortzeit eine eingestellte Bereitschaftstemperatur als Solltemperatur benutzt, dadurch gekennzeichnet, daß die Komfortzeit-Einstelleinrichtung (24) eine Zeitperioden-Einstelleinrichtung ist, und daß eine Einschalteinrichtung (17), die mit der Steuereinrichtung verbunden ist und von außen zugänglich ist, an dem Gehäuse angeordnet ist und durch deren Betrieb die Komfortzeit beginnt.

2. Thermostat nach Anspruch 1, gekennzeichnet durch eine akustische Signalisierungseinrichtung (29), die kurz durch die Steuervorrichtung nach Ablauf der Komfortzeit aktivierbar ist.

3. Thermostat nach Anspruch 1 oder 2, gekennzeichnet durch eine feste Ruhetemperatur-Einstellung und eine Bereitschaftszeit-Einstelleinrichtung (35), welche in der Montageposition des Thermostaten nicht zugänglich ist, wobei die Bereitschaftszeit-Einstelleinrichtung (35) eine Zeitperioden-Einstelleinrichtung ist und wobei die Steuervorrichtung die Bereitschaftstemperatur während der eingestellten Bereitschaftszeit nach Ablauf der Komfortzeit als Solltemperatur und danach die Ruhetemperatur als Solltemperatur benutzt.

4. Thermostat nach einem der vorhergehenden Ansprüche, dadurch gekennzeichnet, daß die Schalteinheit (9) von dem Typ ist, der im aktiven Zustand zwei Leiter (4) einer Heizvorrichtung, die eine elektrische Spannung führen, miteinander verbinden kann, daß die Steuervorrichtung elektronische Schaltungen umfaßt, welche von elektrischen Batteriezellen (3), die in dem Thermostatgehäuse untergebracht sind, versorgt werden, und daß die Batteriezellen (2) mit den Leitern (4) in dem nicht-aktiven Zustand der Schalteinheit verbunden so sind, daß sie durch die elektrische Spannung von den Leitern geladen werden.

## Revendications

1. Thermostat (1) comprenant un boîtier, une unité de commutation (9) logée dans le boîtier qui est un commutateur d'état actif sur un dispositif de chauffage, et un dispositif de contrôle pour l'unité de commutation (9) associée à un capteur de température (7) et comprenant une unité d'horloge, des moyens (15) de réglage de la température de confort, des moyens (22) de réglage de la température d'attente et des moyens (24) de réglage de la période de confort, lesdits moyens (22) de réglage de la température d'attente et lesdits moyens (24) de réglage de la période de confort étant inaccessibles, dans la position installée du thermostat (1), dans lequel le dispositif de contrôle utilise une température de contrôle fixée comme température cible pendant une période de confort fixée et, en dehors de cette période de confort fixée, utilise une température d'attente fixée comme température cible, caractérisé en ce que les moyens (24) de réglage de la période de confort sont des moyens de réglage de temps et en ce que des moyens de mise en route (17) connectés au dispositif de contrôle et accessibles depuis l'extérieur sont agencés sur le boîtier, par l'action desquels la période de confort commence.

2. Thermostat selon la revendication 1, comprenant des moyens d'alarme acoustique (29) qui sont actionnés brièvement par le dispositif de contrôle après expiration de la période de confort.

3. Thermostat selon la revendication 1 ou 2, comprenant un réglage d'une température de repos fixée et des moyens (35) de réglage de la période d'attente qui sont inaccessibles dans la position installée du thermostat, dans lequel les moyens (35) de réglage de période d'attente sont des moyens de réglage de temps et dans lequel le dispositif de contrôle utilise la température d'attente comme température cible pendant la période d'attente fixée après expiration de la période de confort et utilise ensuite la température de repos comme température cible.

4. Thermostat selon l'une quelconque des revendications précédentes, dans lequel l'unité de commutation (9) est du type qui, dans l'état actif, peut connecter, l'un à l'autre, deux conducteurs d'un dispositif de chauffage portant une tension électrique, en ce que le dispositif de contrôle comprend des circuits électroniques qui sont alimentés par des cellules d'accumulateurs électriques (3) logées dans le boîtier du thermostat, et en ce que les cellules d'accumulateur (3) sont connectées aux conducteurs (4) dans l'état non-actif de l'unité de commutation en sorte qu'elles sont chargées par la tension électrique depuis les conducteurs.
